(19) Europäisches Patentamt / European Patent Office / Office européen des brevets

(11) **EP 4 481 854 A1**

(12) **EUROPEAN PATENT APPLICATION**
published in accordance with Art. 153(4) EPC

(43) Date of publication:
**25.12.2024 Bulletin 2024/52**

(21) Application number: 23755708.7

(22) Date of filing: 07.02.2023

(51) International Patent Classification (IPC):
*H01M 4/58* (2010.01)　　*H01M 10/0525* (2010.01)

(52) Cooperative Patent Classification (CPC):
**H01M 4/136; H01M 4/36; H01M 4/58; H01M 4/62;
H01M 10/0525;** Y02E 60/10

(86) International application number:
**PCT/CN2023/074706**

(87) International publication number:
**WO 2023/155705 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 15.02.2022  CN 202210139348

(71) Applicant: BYD Company Limited
Shenzhen, Guangdong 518118 (CN)

(72) Inventors:
• LIU, Jiamin
　Shenzhen, Guangdong 518118 (CN)
• CHEN, Sanzhi
　Shenzhen, Guangdong 518118 (CN)
• GAO, Qingqing
　Shenzhen, Guangdong 518118 (CN)
• HAO, Rong
　Shenzhen, Guangdong 518118 (CN)

(74) Representative: **Dehns Germany Partnerschaft
mbB
Theresienstraße 6-8
80333 München (DE)**

(54) **LITHIUM IRON PHOSPHATE POSITIVE ELECTRODE ACTIVE MATERIAL, POSITIVE ELECTRODE SHEET, AND LITHIUM-ION BATTERY**

(57)　A lithium iron phosphate positive electrode active material and a preparation method thereof are provided. The method includes the following steps: mixing a first lithium iron phosphate material having a particle size $D_v50$ of 0.3-0.70 $\mu$m and a second lithium iron phosphate material having a particle size $D_v50$ of 0.75-1.5 $\mu$m at a certain ratio, such that the particle size of the lithium iron phosphate positive electrode active material meet: $0.95 \leq 0.1 \times (D_v90-D_v10)/D_v5+D_v50 \times D_n50 \leq 3.3$.

FIG. 1

EP 4 481 854 A1

**Description**

## CROSS-REFERENCE TO RELATED APPLICATIONS

The present disclosure claims priority to Chinese Patent Application No. 202210139348.3 filed on February 15, 2022 and entitled "Lithium iron phosphate positive electrode active material, positive electrode sheet and lithium ion battery", which is incorporated herein by reference in its entirety.

## FIELD

The present disclosure relates to the field of lithium ion batteries, and specifically to a lithium iron phosphate positive electrode active material, a positive electrode sheet and a lithium ion battery.

## BACKGROUND

Lithium iron phosphate material has wide use due to the high safety, low cost, environmental friendliness and other advantages. However, the lithium iron phosphate material also has obvious defects. That is, the compaction density of the lithium iron phosphate material is low, which leads to the low energy density of batteries prepared with the lithium iron phosphate material, so the demand for batteries with long battery life cannot be met. To improve the energy density of the battery, a lithium iron phosphate material having high compaction density is needed. However, when the compaction density of the lithium iron phosphate material is increased, the electrochemical performance of the battery is often reduced.

## SUMMARY

In a first aspect, the present disclosure provides a lithium iron phosphate positive electrode active material, which includes:

a first lithium iron phosphate material and a second lithium iron phosphate material. When the cumulative volume distribution percentage of the first lithium iron phosphate material is 50%, the corresponding particle size is $D^1_v50$ (in $\mu$m). When the cumulative volume distribution percentage of the second lithium iron phosphate material is 50%, the corresponding particle size is $D^2_v50$ (in $\mu$m). $D^1_v50$ is in the range of 0.3-0.95, and $D^2_v50$ is in the range of 1.0-3.5. When the cumulative volume distribution percentages of the lithium iron phosphate positive electrode active material are 90%, 10%, 50%, the corresponding particle sizes are respectively $D_v90$ (in $\mu$m), $D_v10$ (in $\mu$m), and $D_v50$ (in $\mu$m). When the cumulative number distribution percentage of the lithium iron phosphate positive electrode active material is 50%, the corresponding particle size is $D_n50$ (in $\mu$m). The particle size of the lithium iron phosphate positive electrode active material meets the following relation formula:

$$0.16 \leq (D_v90 - D_v10)/D_v50 + D_v50 \times D_n50 \leq 31.1.$$

In some embodiments of the present disclosure, the maximum compaction density is 2.55-2.85 g/cm$^3$.
In some embodiments of the present disclosure, $D^1_v50$ of the first lithium iron phosphate material is in the range of 0.4-0.85, and $D^2_v50$ of the second lithium iron phosphate material is in the range of 1.2-3.0.
In some embodiments of the present disclosure, $(D_v90 - D_v10)/D_v50 + D_v50 \times D_n50$ is in the range of 0.2-31.
In some embodiments of the present disclosure, $D_v50 \times D_n50$ is in the range of 0.05-4.9.
In some embodiments of the present disclosure, $D_v50$ of the lithium iron phosphate positive electrode active material is in the range of 0.25-3.5.
In some embodiments of the present disclosure, the mixing weight ratio of the first lithium iron phosphate material and the second lithium iron phosphate material is in the range of 1: (1-9), and further in the range of 1: (1-4).
In some embodiments of the present disclosure, the first lithium iron phosphate material has a carbon coating layer on the surface and/or the second lithium iron phosphate material has a carbon coating layer on the surface.
In a second aspect, the present disclosure provides a positive electrode sheet. The positive electrode sheet includes a lithium iron phosphate positive electrode active material according to the first aspect of the present disclosure.
In some embodiments of the present disclosure, the positive electrode sheet includes a positive electrode current collector and a positive electrode active material layer arranged on a surface of the positive electrode current collector. The positive electrode active material layer includes the lithium iron phosphate positive electrode active material, a binder, and a conductive agent.
In some embodiments of the present disclosure, the positive electrode active material layer is formed by coating a positive electrode paste including the lithium iron phosphate positive electrode active material, the conductive agent, the binder and a solvent on the positive electrode current collector.

In a third aspect, the present disclosure provides a lithium ion battery. The lithium ion battery includes a positive electrode sheet according to the second aspect of the present disclosure.

In some embodiments of the present disclosure, the lithium ion battery further includes a negative electrode sheet, and an electrolyte solution and a separator located between the positive electrode sheet and the negative electrode sheet.

## BRIEF DESCRIPTION OF THE DRAWINGS

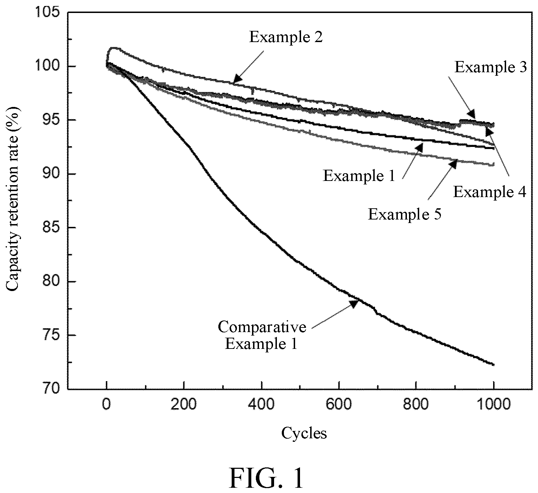

FIG. 1 shows a cycle performance curve of each pouch battery in Embodiments 1 to 5 and Comparative Embodiment 1 of the present disclosure.

## DETAILED DESCRIPTION

The foregoing descriptions are some implementations of the present disclosure. It should be noted that several modifications and variations can be made by those of ordinary skill in the art, without departing from the principle of the present disclosure, which shall fall within the protection scope of the present disclosure.

The present disclosure provides a lithium iron phosphate positive electrode active material, which has increased compaction density, and enables a battery prepared therewith to have good electrochemical performances.

In a first aspect, the present disclosure provides a lithium iron phosphate positive electrode active material, which includes:

a first lithium iron phosphate material and a second lithium iron phosphate material. When the cumulative volume distribution percentage of the first lithium iron phosphate material is 50%, the corresponding particle size in $\mu m$ is $D^1_v50$. When the cumulative volume distribution percentage of the second lithium iron phosphate material is 50%, the corresponding particle size in $\mu m$ is $D^2_v50$. $D^1_v50$ is in the range of 0.3-0.95, and $D^2_v50$ is in the range of 1.0-3.5. When the cumulative volume distribution percentages of the lithium iron phosphate positive electrode active material are 90%, 10%, 50%, the corresponding particle sizes in $\mu m$ are respectively $D_v90$, $D_v10$ and $D_v50$. When the cumulative number distribution percentage of the lithium iron phosphate positive electrode active material is 50%, the corresponding particle size in $\mu m$ is $D_n50$. The particle size of the lithium iron phosphate positive electrode active material meets the following relation formula:

$$0.16 \leq (D_v90 - D_v10)/D_v50 + D_v50 \times D_n50 \leq 31.1.$$

In the present disclosure, two lithium iron phosphate materials having different particle sizes are used, and the particle size of the obtained positive electrode active material is made to meet a certain relation formula, to ensure that the positive electrode active material has a high compaction density (2.55 g/cm$^3$ or higher). This promotes the improvement of the energy density of a battery prepared with the positive electrode active material. In addition, the battery prepared with the positive electrode active material has excellent electrochemical performance, particularly cycle performance.

In some embodiments of the present disclosure, the maximum compaction density of the lithium iron phosphate positive electrode active material is 2.55 g/cm$^3$ or higher. In some embodiments of the present disclosure, the maximum compaction density is 2.55-2.85 g/cm$^3$. It is to be understood that the maximum compaction density of a certain material mentioned in the present disclosure refers to the maximum compaction density obtained by testing the material with a powder compaction densitometer, or the maximum available compaction density of a positive electrode sheet prepared with this material. The maximum compaction density of the positive electrode sheet refers to the corresponding compaction density of the electrode sheet when the active material particles in the positive electrode sheet are crushed under a certain pressure.

The $D^1_v50$ value of the first lithium iron phosphate material and $D^2_v50$ value of the second lithium iron phosphate material can be obtained from their respective laser particle size distribution diagrams. Specifically, the test instrument is a laser particle size analyzer (such as Malvern 3000). The test method can be found in GB/T 19077-2016/ISO 13320:2009 Particle size analysis-Laser diffraction methods. When the cumulative volume distribution percentage of a material is 50%, the corresponding particle size is referred to as median particle size of the material. Similarly, the values of the particle size $D_n50$, $D_v90$, $D_v10$, and $D_v50$ of the lithium iron phosphate positive electrode active material can be obtained by determining the laser particle size distribution of a mixed powder obtained by mixing the first lithium iron phosphate material and the second lithium iron phosphate material.

In the present disclosure, $D^1_v50 < D^2_v50$. When $D^1_v50$ of the lithium iron phosphate material is small, the lithium ion diffusion path is relatively short, and the prepared battery has good electrical performance. When $D^2_v50$ of the lithium iron phosphate material is large, the compaction density of the positive electrode active material can be increased. When

the particle sizes $D_v50$ of the two materials are in the above ranges, by mixing the two materials, the two lithium iron phosphate materials can be ensured to form a dense mass, thus improving the compaction density of the obtained positive electrode active material without compromising the cycle performance of the battery.

In some embodiments of the present disclosure, $D^1_v50$ of the first lithium iron phosphate material is in the range of 0.4-0.85, and $D^2_v50$ of the second lithium iron phosphate material is in the range of 1.2-3.0. In this case, the use of the positive electrode active material obtained by mixing the two lithium iron phosphate materials can well ensure the high compaction density of the positive electrode sheet and the good electrochemical performance of the battery.

In some embodiments of the present disclosure, $(D_v90-D_v10)/D_v50+D_v50 \times D_n50$ is in the range of 0.2-31. In some embodiments, $(D_v90-D_v10)/D_v50+D_v50 \times D_n50$ is in the range of 0.5-30.

In some embodiments of the present disclosure, $D_v50 \times D_n50$ is in the range of 0.05-4.9. In this case, the compaction density of the positive electrode active material is high, and the electrochemical performance is excellent. In some embodiments, $D_v50 \times D_n50$ may be in the range of 0.1-4.5. In some embodiments, $D_v50 \times D_n50$ may be in the range of 0.6-4.

In some embodiments of the present disclosure, $D_v50$ of the lithium iron phosphate positive electrode active material is in the range of 0.25-3.5. $D_v50$ represents the corresponding particle size when the cumulative volume distribution percentage of the positive electrode active material is 50%. If the $D_v50$ value of the positive electrode active material obtained after mixing is in the above range, the positive electrode active material particles can be ensured to be properly piled up, the polarization intensity of the electrode sheet is low, the lithium ion transmission speed is high during the cycle process of the battery, and the energy density of the secondary battery is high.

In the present disclosure, the mixing weight ratio of the first lithium iron phosphate material and the second lithium iron phosphate material is not particularly limited, as long as the particle size of the positive electrode active material formed by mixing the two is ensured to meet the above relation formula. In some embodiments of the present disclosure, the mixing weight ratio of the first lithium iron phosphate material and the second lithium iron phosphate material is in the range of 1: (1-9), and further in the range of 1: (1-4). In this case, the positive electrode active material formed by mixing the two lithium iron phosphate materials can well ensure the high compaction density of the electrode sheet and the good cycle performance of the battery.

In some embodiments of the present disclosure, the first lithium iron phosphate material has a carbon coating layer on the surface and/or the second lithium iron phosphate material has a carbon coating layer on the surface. The carbon coating layer can be obtained by sequentially sanding, spray drying and sintering a mixed slurry of a phosphorus source, an iron source, a lithium source and a carbon source. In the present disclosure, the specific preparation method of the two lithium iron phosphate materials is not limited. The presence of the carbon coating layer allows the first and the second lithium iron phosphate material to have good electrical conductivity, and less side reactions with the electrolyte solution. The positive electrode active material obtained by mixing the two has good electrical conductivity, and the cycle performance of the battery is good.

According to the lithium iron phosphate positive electrode active material provided in the first aspect of the present disclosure, by mixing two lithium iron phosphate materials meeting the requirements of specific particle size parameters, it can be ensured that the obtained positive electrode active material has a high compaction density, and a battery prepared with the positive electrode active material has good cycle performance and rate performance. The preparation method has simple process, and is easy to operate, thus being suitable for use in large-scale production.

In a second aspect, the present disclosure provides a positive electrode sheet. The positive electrode sheet includes a lithium iron phosphate positive electrode active material according to the first aspect of the present disclosure.

In some embodiments of the present disclosure, the positive electrode sheet includes a positive electrode current collector and a positive electrode active material layer arranged on a surface of the positive electrode current collector. The positive electrode active material layer includes the lithium iron phosphate positive electrode active material, a binder, and a conductive agent.

The maximum compaction density of the positive electrode sheet is 2.55 g/cm$^3$ or higher. In some embodiments, the maximum compaction density is 2.55-2.85 g/cm$^3$.

In some embodiments of the present disclosure, the positive electrode active material layer is formed by coating a positive electrode paste including the lithium iron phosphate positive electrode active material, the conductive agent, the binder and a solvent on the positive electrode current collector. The solvent can be one or more of N- methylpyrrolidone (NMP), acetone and dimethyl acetamide (DMAC). The positive electrode current collector includes any one of an aluminum foil, a carbon-coated aluminum foil and a perforated aluminum foil. The conductive agent includes, but is not limited to, one or more of carbon nanotubes, graphene carbon black, carbon fiber and the like. The binder includes, but is not limited to, one or more of polyvinylidene fluoride (PVDF), polytetrafluoroethylene (PTFE), polyvinyl alcohol (PVA), styrene-butadiene rubber (SBR), polyacrylic acid (PAA), polyacrylate, polyacrylonitrile (PAN), sodium carboxymethyl cellulose (CMC) and sodium alginate.

In a third aspect, the present disclosure provides a lithium ion battery. The lithium ion battery includes a positive electrode sheet according to the second aspect of the present disclosure.

In some embodiments of the present disclosure, the lithium ion battery further includes a negative electrode sheet, and an electrolyte solution and a separator located between the positive electrode sheet and the negative electrode sheet.

The lithium ion battery using the positive electrode sheet has high energy density and excellent cycle performance.

In the following, the technical solution of the present disclosure will be described in combination with specific embodiments.

**Example 1**

A method for preparing a lithium iron phosphate positive electrode active material includes the following steps:

A first lithium iron phosphate material LFP-1 was used, where when the cumulative volume distribution percentage was 50%, the corresponding particle size determined was 0.56 $\mu$m, that is, $D^1_v50$ was 0.56.

A second lithium iron phosphate material LFP-2 was used, where when the cumulative volume distribution percentage was 50%, the corresponding particle size determined was 1.85 $\mu$m, that is, $D^2_v50$ was 1.85.

The LFP-1 material and the LFP-2 material were mixed at a weight ratio of 2: 8, to obtain a lithium iron phosphate positive electrode active material LFP-3. When the cumulative volume distribution percentages of the LFP-3 material were 10%, 50%, 90%, the corresponding particle sizes were respectively 0.31 $\mu$m, 0.74 $\mu$m, and 4.97 $\mu$m (that is, $D_v10$ was 0.31, $D_v50$ was 0.74, and $D_v90$ was 4.97). When the cumulative number distribution percentage was 50%, the corresponding particle size is 0.84 $\mu$m (that is, $D_n50$ was 0.84). As calculated, $(D_v90-D_v10)/D_v50+D_v50 \times D_n50=6.92$, and $D_v50 \times D_n50=0.6216$.

The positive electrode active material LFP-3 was prepared into a positive electrode sheet, by mixing the LFP-3 material with a binder (specifically, polyvinylidene fluoride (PVDF)) and conductive carbon black at a weight ratio of 85:5:10, adding an appropriate amount of N-methyl pyrrolidone (NMP), and mixing uniformly, to obtain a positive electrode paste. The positive electrode paste was coated on two sides of a carbon-coated aluminum foil, and dried, to obtain a positive electrode sheet. The maximum compaction density of the positive electrode sheet without particle breakage was determined. The maximum compaction density of the positive electrode sheet was determined to be 2.63 g/cm$^3$.

Preparation of pouch lithium ion battery: The positive electrode sheet prepared with the positive electrode active material LFP-3 in Example 1 was used as a positive electrode. A graphite electrode sheet was used as a negative electrode. A polypropylene film was used as a separator. A solution containing 1.0 mol/L LiPF$_6$ in ethylene carbonate (EC): dimethyl carbonate (DMC)=1:1 (volume ratio) was used as an electrolyte solution. After assembly, a pouch battery was obtained.

**Example 2**

A method for preparing a lithium iron phosphate positive electrode active material includes the following steps: A first lithium iron phosphate material LFP-1 was used, and $D^1_v50$ (the concept was as described in Example 1, and would not be repeated here, hereinafter) was determined to be 0.65.

A second lithium iron phosphate material LFP-2 was used, and $D^2_v50$ (the concept was as described in Example 1, and would not be repeated here, hereinafter) was determined to be 2.5.

The LFP-1 material and the LFP-2 material were mixed at a weight ratio of 3:7, to obtain a lithium iron phosphate positive electrode active material LFP-3. For the LFP-3 material, $D_v10$ was 0.19, $D_v50$ was 1.15, $D_v90$ was 4.97, $D_n50$ was 1.89, $(D_v90-D_v10)/D_v50+D_v50 \times D_n50=6.33$, and $D_v50 \times D_n50=2.1735$.

Following the method described in Example 1, the positive electrode active material LFP-3 obtained in Example 2 was prepared into a positive electrode sheet, and assembled into a pouch battery. The maximum compaction density of the positive electrode sheet in Example 2 was determined to be 2.67 g/cm$^3$.

**Example 3**

A method for preparing a lithium iron phosphate positive electrode active material includes the following steps: A first lithium iron phosphate material LFP-1 was used, and $D^1_v50$ was determined to be 0.92.

A second lithium iron phosphate material LFP-2 was used, and $D^2_v50$ was determined to be 3.43.

The LFP-1 material and the LFP-2 material were mixed at a weight ratio of 4:6, to obtain a lithium iron phosphate positive electrode active material LFP-3. For the LFP-3 material, $D_v10$ was 0.31, $D_v50$ was 0.89, $D_v90$ was 6.67, $D_n50$ was 4.31, $(D_v90-D_v10)/D_v50+D_v50 \times D_n50=10.98$, and $D_v50 \times D_n50=3.8359$.

Following the method described in Example 1, the positive electrode active material LFP-3 obtained in Example 3 was prepared into a positive electrode sheet, and assembled into a pouch battery. The maximum compaction density of the positive electrode sheet in Example 3 was determined to be 2.60 g/cm$^3$.

**Example 4**

A method for preparing a lithium iron phosphate positive electrode active material includes the following steps: A first lithium iron phosphate material LFP-1 was used, and $D^1_v50$ was determined to be 0.15.

A second lithium iron phosphate material LFP-2 was used, and $D^2_v50$ was determined to be 1.15.

The LFP-1 material and the LFP-2 material were mixed at a weight ratio of 3:7, to obtain a lithium iron phosphate positive electrode active material LFP-3. For the LFP-3 material, $D_v10$ was 0.17, $D_v50$ was 0.25, $D_v90$ was 6.7, $D_n50$ was 2.77, $(D_v90-D_v10)/D_v50+D_v50 \times D_n50=26.81$, and $D_v50 \times D_n50=0.6925$.

Following the method described in Example 1, the positive electrode active material LFP-3 obtained in Example 4 was prepared into a positive electrode sheet, and assembled into a pouch battery. The maximum compaction density of the positive electrode sheet in Example 4 was determined to be 2.79 $g/cm^3$.

**Example 5**

A method for preparing a lithium iron phosphate positive electrode active material includes the following steps: A first lithium iron phosphate material LFP-1 was used, and $D^1_v50$ was determined to be 0.92.

A second lithium iron phosphate material LFP-2 was used, and $D^2_v50$ was determined to be 1.23.

The LFP-1 material and the LFP-2 material were mixed at a weight ratio of 1:9, to obtain a lithium iron phosphate positive electrode active material LFP-3. For the LFP-3 material, $D_v10$ was 0.25, $D_v50$ was 0.67, $D_v90$ was 5.79, $D_n50$ was 1.32, $(D_v90-D_v10)/D_v50+D_v50 \times D_n50=9.15$, and $D_v50 \times D_n50=0.8844$.

Following the method described in Example 1, the positive electrode active material LFP-3 obtained in Example 5 was prepared into a positive electrode sheet, and assembled into a pouch battery. The maximum compaction density of the positive electrode sheet in Example 5 was determined to be 2.83 $g/cm^3$.

**Example 6**

A method for preparing a lithium iron phosphate positive electrode active material includes the following steps: A first lithium iron phosphate material LFP-1 was used, and $D^1_v50$ was determined to be 0.90.

A second lithium iron phosphate material LFP-2 was used, and $D^2_v50$ was determined to be 1.12.

The LFP-1 material and the LFP-2 material were mixed at a weight ratio of 1:9, to obtain a lithium iron phosphate positive electrode active material LFP-3. For the LFP-3 material, $D_v10$ was 0.8, $D_v50$ was 3.5, $D_v90$ was 4.23, $D_n50$ was 0.23, $(D_v90-D_v10)/D_v50+D_v50 \times D_n50=1.785$, and $D_v50 \times D_n50=0.805$.

Following the method described in Example 1, the positive electrode active material LFP-3 obtained in Example 6 was prepared into a positive electrode sheet, and assembled into a pouch battery. The maximum compaction density of the positive electrode sheet in Example 6 was determined to be 2.62 $g/cm^3$.

To highlight the beneficial effects of the present disclosure, the following comparative examples are provided.

Comparative Example 1

A method for preparing a lithium iron phosphate positive electrode active material includes the following steps: A first lithium iron phosphate material LFP-1 was used, and $D^1_v50$ was determined to be 0.95.

A second lithium iron phosphate material LFP-2 was used, and $D^2_v50$ was determined to be 3.45.

The LFP-1 material and the LFP-2 material were mixed at a weight ratio of 1:9, to obtain a lithium iron phosphate positive electrode active material LFP-3. For the LFP-3 material, $D_v10$ was 0.94, $D_v50$ was 4.55, $D_v90$ was 7.89, $D_n50$ was 6.78, and $(D_v90-D_v10)/D_v50+D_v50 \times D_n50=32.38$, which fell outside the range of 0.16-31.1 defined in the present disclosure.

Following the method described in Example 1, the positive electrode active material LFP-3 obtained in Comparative Example 1 was prepared into a positive electrode sheet, and assembled into a pouch battery. The maximum compaction density of the positive electrode sheet in Comparative Example 1 was determined to be 2.49 $g/cm^3$.

Comparative Example 2

A method for preparing a lithium iron phosphate positive electrode active material includes the following steps: A first lithium iron phosphate material LFP-1 was used, and $D^1_v50$ was determined to be 1.24, which fell outside the range of 0.3-0.95 defined in the present disclosure.

A second lithium iron phosphate material LFP-2 was used, and $D^2_v50$ was determined to be 4.2, which fell outside the range of 1.0-3.5 defined in the present disclosure.

The LFP-1 material and the LFP-2 material were mixed at a certain weight ratio, to obtain a lithium iron phosphate positive electrode active material LFP-3. For the LFP-3 material, $D_v10$ was 0.87, $D_v50$ was 3.21, $D_v90$ was 8.32, $D_n50$ was 3.65, and $(D_v90-D_v10)/D_v50+D_v50 \times D_n50=14.04$.

Following the method described in Example 1, the positive electrode active material LFP-3 obtained in Comparative Example 2 was prepared into a positive electrode sheet, and assembled into a pouch battery. The maximum compaction density of the positive electrode sheet in Comparative Example 2 was determined to be 2.35 $g/cm^3$.

To provide powerful support for the beneficial effects of the present disclosure, the pouch battery of each example and comparative example were tested for the following electrochemical performance.

1) Cycle performance: Each pouch battery was subjected to charge-discharge cycle test at 0.5C/0.5C at 25°C. The voltage range was 2.0-3.8V. During charging, the battery was charged to 3.8 V at a constant current of 0.5C and then charged to a cut-off current of 0.05 C at a constant voltage. The first-cycle coulombic efficiency and the capacity retention rate after 1000 charge-discharge cycles were tested.

2) Discharge capacity per gram of positive electrode active material: In a voltage range of 2.0-3.8 V, the positive electrode active material LFP-3 of each example and comparative example was charged to 3.8V at a constant current LFP-3 of 0.1C, and then to a cut-off current of 0.05 C at a constant voltage. Then, the positive electrode active material was discharged to 2.0 V at a constant current of 0.1 C. The charge and discharge process was repeated 3 times. The discharge capacity of the 3rd time was recorded as Co, Co dividing the weight of LFP-3 in each example and comparative example was the capacity per gram of LFP-3.

FIG. 1 shows a cycle performance curve of each pouch battery in Embodiments 1 to 5 and Comparative Embodiment 1. The first-cycle coulombic efficiency, the capacity retention rate after 1000 cycles, and other data of the batteries of each example and comparative example are summarized in Table 1 below.

Table 1

| Test item | First-cycle coulombic efficiency (%) | Discharge capacity per gram (mAh/g) | Capacity retention rate after 1000 cycles (%) |
|---|---|---|---|
| Example 1 | 98.6 | 149 | 93.8 |
| Example 2 | 98.6 | 152 | 92.5 |
| Example 3 | 98.9 | 154 | 94.6 |
| Example 4 | 98.7 | 153 | 94.7 |
| Example 5 | 99.0 | 157 | 94.6 |
| Example 6 | 98.2 | 148 | 92.1 |
| Comparative Example 1 | 90.1 | 121 | 65.1 |
| Comparative Example 2 | 87.9 | 137 | 74.3 |

As can be seen from FIG. 1 and Table 1, the positive electrode active material prepared by the method provided in the present disclosure has higher compaction density, and the battery prepared therewith has excellent electrochemical performances. For example, the first-cycle coulombic efficiency can be greater than 96%, the positive electrode has a high capacity per gram, and the capacity retention rate after 1000 cycles is still above 90%. In contrast, the relation formula of particle size of the positive electrode active material in Comparative Example 1 falls outside the range defined in the present disclosure. Consequently, although the compaction density of the positive electrode sheet is close to 2.5 $g/cm^3$, it is still lower than the compaction density of the positive electrode in the present disclosure. Moreover, the first-cycle coulombic efficiency and cycle performance of the battery in Comparative Examples 1 are poor, and far inferior to the battery according to the present disclosure. In Comparative Embodiment 2, although the relation formula of particle size of the positive electrode active material falls within the range defined in the present disclosure, the median particle size of the two raw materials forming the positive active material are not within the range required the present disclosure. Therefore, the compaction density of the positive electrode sheet is low, and the cycle performance of the battery is poor.

The foregoing embodiments show only several implementations of the present disclosure and are described in detail, which, however, are not to be construed as a limitation to the scope of the present disclosure. It is to be understood that several variations and improvements can be made by those of ordinary skill in the art without departing from the idea of the present disclosure, which are all contemplated in the protection scope of the present disclosure. Therefore, the protection scope of the present disclosure shall be defined by the appended claims.

**Claims**

1. A lithium iron phosphate positive electrode active material, comprising:

   a first lithium iron phosphate material and a second lithium iron phosphate material, wherein when the cumulative volume distribution percentage of the first lithium iron phosphate material is 50%, the corresponding particle size in $\mu$m is $D^1_v50$, when the cumulative volume distribution percentage of the second lithium iron phosphate material is 50%, the corresponding particle size in $\mu$m is $D^2_v50$, $D^1_v50$ is in the range of 0.3-0.95, and $D^2_v50$ is in the range of 1.0-3.5; and

   when the cumulative volume distribution percentages of the lithium iron phosphate positive electrode active material are 90%, 10%, 50%, the corresponding particle sizes in $\mu$m are respectively $D_v90$, $D_v10$, and $D_v50$, when the cumulative number distribution percentage of the lithium iron phosphate positive electrode active material is 50%, the corresponding particle size in $\mu$m is $D_n50$, and the particle size of the lithium iron phosphate positive electrode active material meets the following relation formula:

$$0.16 \leq (D_v90 - D_v10)/D_v50 + D_v50 \times D_n50 \leq 31.1.$$

2. The lithium iron phosphate positive electrode active material according to claim 1, wherein the maximum compaction density of the lithium iron phosphate positive electrode active material is in the range of 2.55-2.85 g/cm$^3$.

3. The lithium iron phosphate positive electrode active material according to claim 1 or 2, wherein $D^1_v50$ of the first lithium iron phosphate material is in the range of 0.4-0.85, and $D^2_v50$ of the second lithium iron phosphate material is in the range of 1.2-3.0.

4. The lithium iron phosphate positive electrode active material according to any one of claims 1 to 3, wherein $(D_v90 - D_v10)/D_v50 + D_v50 \times D_n50$ is in the range of 0.2-31.

5. The lithium iron phosphate positive electrode active material according to any one of claims 1 to 4, wherein $D_v50 \times D_n50$ is in the range of 0.05-4.9.

6. The lithium iron phosphate positive electrode active material according to any one of claims 1 to 5, wherein $D_v50$ is in the range of 0.25-3.5.

7. The lithium iron phosphate positive electrode active material according to any one of claims 1 to 6, wherein the weight ratio of the first lithium iron phosphate material and the second lithium iron phosphate material is in the range of 1: (1-9).

8. The lithium iron phosphate positive electrode active material according to any one of claims 1 to 7, wherein the first lithium iron phosphate material has a carbon coating layer on the surface and/or the second lithium iron phosphate material has a carbon coating layer on the surface.

9. A positive electrode sheet, comprising a lithium iron phosphate positive electrode active material according to any one of claims 1 to 8.

10. The positive electrode sheet according to claim 9, wherein the positive electrode sheet comprises a positive electrode current collector and a positive electrode active material layer arranged on a surface of the positive electrode current collector, and the positive electrode active material layer comprises the lithium iron phosphate positive electrode active material, a binder, and a conductive agent.

11. The positive electrode sheet according to claim 10, wherein the positive electrode active material layer is formed by coating a positive electrode paste comprising the lithium iron phosphate positive electrode active material, the conductive agent, the binder and a solvent on the positive electrode current collector.

12. A lithium ion battery, comprising a positive electrode sheet according to any one of claims 9 to 11.

13. The lithium ion battery according to claim 12, further comprising a negative electrode sheet, and an electrolyte solution and a separator located between the positive electrode sheet and the negative electrode sheet.

FIG. 1

## INTERNATIONAL SEARCH REPORT

| International application No. |
| --- |
| **PCT/CN2023/074706** |

**A. CLASSIFICATION OF SUBJECT MATTER**

H01M4/58(2010.01)i;H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 正极, 阴极, 材料, 磷酸铁锂, 体积, 数量, 粒径, 累积, positive electrode, cathode, material, lithium iron phosphate, volume, number, grain diameter, accumulate

**C. DOCUMENTS CONSIDERED TO BE RELEVANT**

| Category* | Citation of document, with indication, where appropriate, of the relevant passages | Relevant to claim No. |
| --- | --- | --- |
| PY | CN 115472898 A (SUNWODA ELECTRIC VEHICLE BATTERY CO., LTD.) 13 December 2022 (2022-12-13)<br>description, paragraphs 5-110 | 1-13 |
| Y | CN 113800493 A (EVE ENERGY CO., LTD.) 17 December 2021 (2021-12-17)<br>description, paragraphs 6-41 and 69-86 | 1-13 |
| Y | CN 110233259 A (CONTEMPORARY AMPEREX TECHNOLOGY CO., LTD.) 13 September 2019 (2019-09-13)<br>description, paragraphs 11-121, and figures 1-4 | 1-13 |
| Y | CA 2614634 C (PHOSTECH LITHIUM INC.) 30 April 2013 (2013-04-30)<br>description, page 3 line 13 to page 20 line 2 | 1-13 |
| A | CN 106356563 A (TOYOTA MOTOR CORP.) 25 January 2017 (2017-01-25)<br>entire document | 1-13 |
| A | CN 111584833 A (SK INNOVATION CO., LTD.) 25 August 2020 (2020-08-25)<br>entire document | 1-13 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 May 2023** | **08 May 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/074706** |

**C.    DOCUMENTS CONSIDERED TO BE RELEVANT**

| Category* | Citation of document, with indication, where appropriate, of the relevant passages | Relevant to claim No. |
|---|---|---|
| A | CN 111837269 A (AEKYUNG PETROCHEMICAL CO., LTD) 27 October 2020 (2020-10-27)<br>    entire document | 1-13 |

Form PCT/ISA/210 (second sheet) (July 2022)

<div align="center">

**INTERNATIONAL SEARCH REPORT**
**Information on patent family members**

</div>

| International application No. |
| --- |
| **PCT/CN2023/074706** |

| Patent document cited in search report | | | Publication date (day/month/year) | Patent family member(s) | | | Publication date (day/month/year) |
| --- | --- | --- | --- | --- | --- | --- | --- |
| CN | 115472898 | A | 13 December 2022 | None | | | |
| CN | 113800493 | A | 17 December 2021 | CN | 113800493 | B | 31 March 2023 |
| CN | 110233259 | A | 13 September 2019 | WO | 2020135767 | A1 | 02 July 2020 |
| | | | | EP | 3799165 | A1 | 31 March 2021 |
| | | | | US | 2022077464 | A1 | 10 March 2022 |
| | | | | JP | 2022515872 | A | 22 February 2022 |
| | | | | JP | 7165271 | B2 | 02 November 2022 |
| | | | | CN | 110233259 | B | 09 February 2021 |
| CA | 2614634 | C | 30 April 2013 | CA | 2614634 | A1 | 14 June 2009 |
| CN | 106356563 | A | 25 January 2017 | US | 2017018762 | A1 | 19 January 2017 |
| | | | | US | 10135060 | B2 | 20 November 2018 |
| | | | | KR | 20170009753 | A | 25 January 2017 |
| | | | | JP | 2017027927 | A | 02 February 2017 |
| | | | | JP | 6337914 | B2 | 06 June 2018 |
| | | | | KR | 101895670 | B1 | 05 September 2018 |
| | | | | CN | 106356563 | B | 01 February 2019 |
| CN | 111584833 | A | 25 August 2020 | US | 2022216458 | A1 | 07 July 2022 |
| | | | | US | 11563206 | B2 | 24 January 2023 |
| | | | | KR | 20200099872 | A | 25 August 2020 |
| | | | | US | 2020266422 | A1 | 20 August 2020 |
| | | | | US | 11322735 | B2 | 03 May 2022 |
| CN | 111837269 | A | 27 October 2020 | WO | 2020166792 | A1 | 20 August 2020 |
| | | | | KR | 102025119 | B1 | 04 November 2019 |
| | | | | US | 2021214234 | A1 | 15 July 2021 |
| | | | | JP | 2021516414 | A | 01 July 2021 |

Form PCT/ISA/210 (patent family annex) (July 2022)

**EP 4 481 854 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210139348